# EUROPEAN PATENT APPLICATION

(11) **EP 3 970 461 A1**
(43) Date of publication of application: **23.03.2022**
(21) Application number: 20196637.1
(22) Date of filing: 17.09.2020
(51) Int. Cl.: A01B 61/04, A01B 15/14, A01B 3/46, A01B 3/42

(54) **IMPROVED BEAM ATTACHMENT BRACKET**

(71) Applicant: CNH Industrial Sweden AB, 590 96 Överum (SE)
(72) Inventor: Hertzog, Daniel, 59376 Blackstad (SE)
(74) Representative: CNH Industrial IP Department

(57) **Abstract**

The present disclosure relates to an agricultural beam attachment bracket (800) for mounting a beam (932) for one or more ground engaging tools to a main frame (902) of an agricultural implement, the beam attachment bracket (800) being able to pivotably connect the beam (932) to the main frame, wherein the beam attachment bracket (800) is configured to be pivotably attached to an outer surface of the main frame (902), and wherein the beam attachment bracket (800) comprises a link member (806) configured to extend at least partly into an inner cavity (901) of the main frame (902).

## Description

### Background of the Invention

The present disclosure relates to a beam attachment bracket for an agricultural implement, particularly, but not exclusively, to an agricultural plough implement. Other aspects relate to an agricultural implement comprising the bracket and an agricultural machinery comprising the agricultural implement connected to a tractor.

In agriculture, farming cycles are followed that can roughly be divided into the different steps of land preparation, seed sowing, fertilizing, irrigation, crop growth, and harvesting. Each of these steps is critical to yield optimal crop results and achieve the desired returns on initial investments. Of the listed steps, land preparation is typically further divided into steps of, as necessary, clearing obstructions (e.g. bushes, stones and rocks) and subsequent tillage.

Tilling crumbles and loosens the soil, improves the soil structure and incorporates crop residues and manure into the soil, thus fertilizing the ground. The improved soil structure allows for increased plant root growth, soil aeration and water penetration/filtration. Overall this results in higher yields, better long-term soil fertility, soil moisture retention, and weed management. Tillage can be separated into primary (relatively deep) and secondary (relatively shallow) tillage. In primary tillage, such as ploughing, the soil is turned over such that nutrients come to the surface. In addition to turning up the soil to bring fresh nutrients to the top and depositing plant residue below where it will break down, this process also aerates the earth - enabling it to hold more moisture. Preparing the land to a greater depth produces a rougher surface finish than secondary tillage. Secondary tillage (e.g. seedbed cultivation) breaks up soil clods into smaller masses which might be desirable for small seeds or plants that have minimal clod-handling ability.

Primary tillage, and particularly ploughing, is widely regarded as one of the most effective alternatives of preventing crop disease, removing weeds, and controlling mice and other pests. In its simplest form the turnplough, also known as the mouldboard plough, includes a variety of plough bodies, which are blades for penetrating and turning over the soil in arrays of adjacent trenches, known as furrows. Ploughs typically include a plurality of plough bodies connected to a plough frame in a laterally offset manner. Each plough body is connected to the plough frame (or main frame) via corresponding beams. The plough frame, in turn, is connected to a towing or pushing vehicle via a headstock arranged at a front or back end of the frame.

Most modern ploughs are of the reversible type, in which the main frame of the plough is rotatable by 180 degrees (reversed) with respect to the headstock. A turning cylinder attached to the headstock may be used to rotate (reverse) the plough. Before rotating the plough, the main frame is lifted by a towing vehicle that is connected to the headstock end of the frame. The reversal process may commence once the main frame is lifted sufficiently high that all of the plough bodies are elevated above the ground. During rotation of the so elevated main frame, a first set of plough bodies, which is initially arranged below the main frame (first configuration), is transferred to the top of the main frame. At the same time, a second set of plough bodies, which is initially arranged on top of the main frame, is then transferred to a position below the main frame. The reversible plough is then in its second configuration. This process works both ways, such that the main frame may also be rotated back to its first configuration. Whenever the plough is reversed, the first and the second set of plough bodies swap position.

In both configurations, the plough bodies may be biased into the ground by hydraulic actuators connected to a hydraulic accumulator and/or a hydraulic fluid supply of the agricultural work vehicle. To this end, the plough bodies, which are connected to the end of a beam, are pivotably attached to a main frame via the beams. The connection between the beams of the plough bodies and the main frame is typically facilitated by large and heavy beam attachment brackets that require a significant amount of maintenance.

In view of the aforementioned problem, there is a need for improved beam attachment brackets.

It is an aim of the present disclosure to solve or at least ameliorate one or more problems of the prior art.

### Summary of the Invention

Aspects and embodiments of the disclosure provide beam attachment brackets, an agricultural implement, and agricultural machinery as claimed in the appended claims.

According to a first aspect of the present disclosure, there is provided an agricultural beam attachment bracket for mounting a beam for one or more ground engaging tools to a main frame of an agricultural implement, the beam attachment bracket being able to pivotably connect the beam to the main frame, when in use, wherein the beam attachment bracket is configured to be pivotably attached to an outer surface of the main frame, and wherein the beam attachment bracket comprises a link member configured to extend at least partly into an inner cavity of the main frame, when in use.

According to another embodiment, the beam attachment bracket comprises a first pivot bushing configured for connection to an outer surface of a first wall of the main frame and a second pivot bushing configured for connection to an outer surface of a second wall (920) of the main frame that is arranged opposite to the first wall.

In another embodiment, the beam attachment bracket (800) comprises:
a base plate;
a first hinge receptacle extending from a first surface of the base plate and configured to form a first hinge joint together with a corresponding first hinge cylinder of the beam, when in use, the first hinge receptacle (816) facilitating a pivoting movement of the beam about the first hinge receptacle when the main frame is in a first configuration;
a second hinge receptacle extending from the first surface of the base plate and configured to form a second hinge joint together with a corresponding second hinge cylinder of the beam, when in use, the second hinge receptacle facilitating a pivoting movement of the beam about the second hinge respectable, when the main frame is in a second configuration; and
a bar-frame connection point for connecting a connection-bar of a stone-trip-mechanism to the beam attachment bracket, the bar-frame connection point extending from a second surface of the base plate, the second surface being opposite the first surface.

In another embodiment, the link member extends from the second surface of the base plate.

The base plate may comprise a connection-bar opening extending between its first and second surface.

In another embodiment, the bar-frame connection point comprises first and second lugs arranged adjacent to and on opposite sides of the connection-bar opening.

In another embodiment, the base plate and the link member are integrally formed.

In another embodiment, the beam attachment bracket is made of steel or cast iron.

According to another aspect of the present disclosure, there is provided an agricultural implement comprising:
a main frame, said main frame being able to support a plurality of ground engaging tools and extending between a first end that is connectable to an agricultural work vehicle and an opposite, second end, wherein the main frame defines at least one cavity extending at least partly between the first and second end of the main frame; and
at least one of the above beam attachment brackets.

In another embodiment, the agricultural implement comprises a stay arranged within the at least one cavity of the main frame and connected to the link member of the at least one beam attachment bracket.

In another embodiment, the stay is connected to the link member in such a way that movement of the stay causes a pivoting movement of the beam attachment bracket with respect to the main frame.

In another embodiment, the agricultural implement comprises a plurality of said beam attachment brackets each beam attachment bracket being pivotably connected to an outside surface of the main frame, and wherein each of the link members is connected to the stay in such a way that movement of the stay causes synchronised pivoting movement of each of the beam attachment brackets.

In another embodiment, the main frame comprises a first wall, an opposite second wall, an intermediate wall connecting the first and second walls, and wherein the intermediate wall comprises at least one void extending through the intermediate wall, and wherein the link member of the at least one beam attachment bracket extends through the at least one void into the at least one cavity of the main frame.

In another embodiment, the at least one void is sized to allow movement of the link member and the beam attachment bracket with respect to the main frame.

In another embodiment, the main frame comprises a first wall, an opposite second wall, the first and second walls each comprising an outer surface facing away from the at least one cavity and an opposite, inner surface facing in the direction of the at least once cavity, and wherein the beam attachment bracket comprises a first pivot bushing pivotably connected to the outer surface of the first wall and a second pivot bushing pivotably connected to the outer surface of the second wall.

According to another aspect of the present disclosure, there is provided an agricultural machinery comprising an agricultural work vehicle and the above agricultural implement. The agricultural implement may be attached to the front or the rear of the agricultural work vehicle. In some embodiments, one agricultural implement is attached to the front and one to the rear of the agricultural work vehicle.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### Brief Description of the Drawings

One or more embodiments of the present disclosure will now be described by way of example only, with reference to the accompanying drawings, in which:
Figures 1A to 1C show various views of an agricultural plough;
Figure 2 shows a schematic view of an agricultural machinery in a working field;
Figures 3A, 3B and 3C illustrate part of a plough that includes a stone trip mechanism;
Figure 4 illustrates a main frame of an agricultural implement;
Figure 5A shows a perspective view of a beam attachment bracket according to an embodiment of the present disclosure;
Figure 5B shows a plan view of the beam attachment bracket shown in Figure 5A;
Figure 6 shows a section of a main frame of an agricultural implement equipped with the beam attachment bracket shown in Figures 5A and 5B;
Figure 7 shows a main frame of an agricultural implement equipped with a plurality of beam attachment brackets per Figures 5A and 5B connecting the main frame to a plurality of plough beams.
Figure 8A shows a perspective front view of a beam attachment bracket according to an embodiment of the present disclosure;
Figure 8B shows a perspective rear view of the beam attachment bracket shown in Figure 8A;
Figure 9 shows a section of a main frame of an agricultural implement equipped with the beam attachment bracket shown in Figures 8A and 8B;
Figure 10 shows a cross-section through pivot pins of for attaching the beam attachment bracket to the main frame.

### Detailed Description of the Drawings

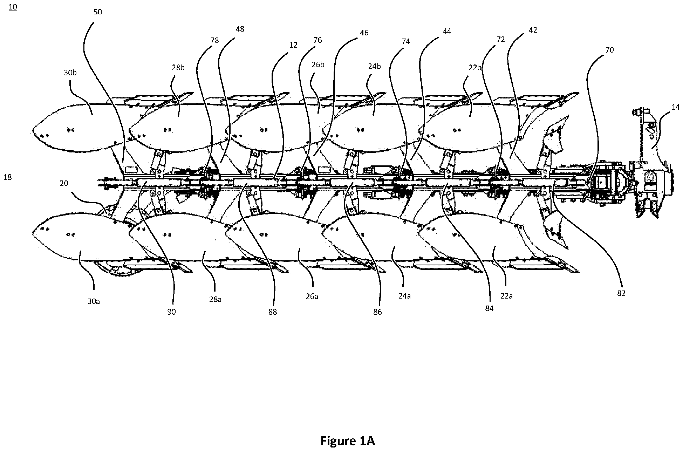

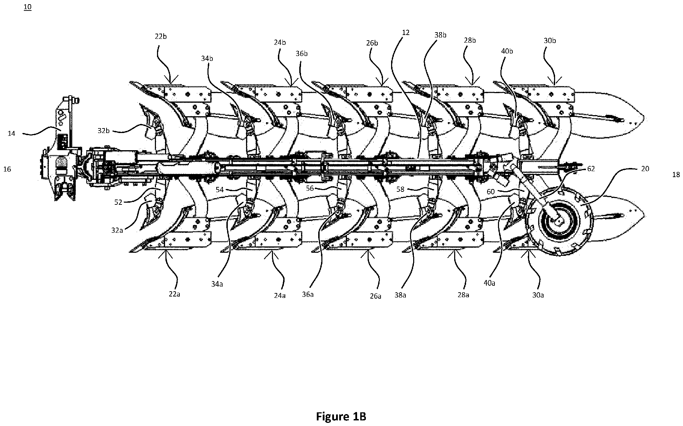

Figures 1A to 1C show various views of an agricultural implement, particularly a plough 10. As will be described in more detail below, the plough 10 shown in Figures 1A to 1C is a reversible plough.

The plough 10 comprises a main frame 12. The main frame 12 extends between a headstock 14 at a first, front end 16 of the plough towards a second, rear end 18 of the plough. The main frame 12 supports a variety of ground-engaging tools. In the example of Figures 1A to 1C, the ground engaging tools include plough bodies 22a, 22b, 24a, 24b, 26a, 26b, 28a, 28b, 30a, 30b and plough skimmers 32a, 32b, 34a, 34b, 36a, 36b, 38a, 38b, 40a, 40b. Each of the plough bodies 22a, 22b, 24a, 24b, 26a, 26b, 28a, 28b, 30a, 30b are connected to the main frame 12 by means of beams 42, 44, 46, 48, 50. Each of the beams 42, 44, 46, 48, 50 has a substantially Y-shaped structure to support pairs of plough bodies.

A first beam 42 supports a first pair of plough bodies 22a, 22b. A second beam 44 supports a second pair of plough bodies 24a, 24b. A third beam 46 supports a third pair of plough bodies 26a, 26b. A fourth beam 48 supports a fourth pair of plough bodies 28a, 28b. A fifth beam 50 supports a fifth pair of plough bodies 30a, 30b.

Each of the beams 42, 44, 46, 48, 50 of the plough 10 shown in Figures 1A to 1C includes a hydraulic stone-trip mechanism. To this end, each of the Y-shaped beams 42, 44, 46, 48, 50 is pivotable with respect to the main frame 12 about horizontal hinge joints of a corresponding beam attachment bracket 70, 72, 74, 76, 78, such that each of the beams 42 to 50 can pivot their respective plough bodies 22a, 22b, 24a, 24b, 26a, 26b, 28a, 28b, 30a, 30b out of the soil, when the plough body hits a subterranean obstacle, such as a stone buried in the soil.

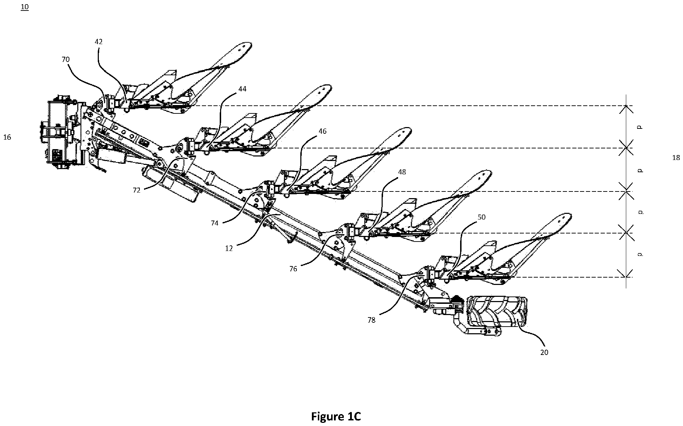

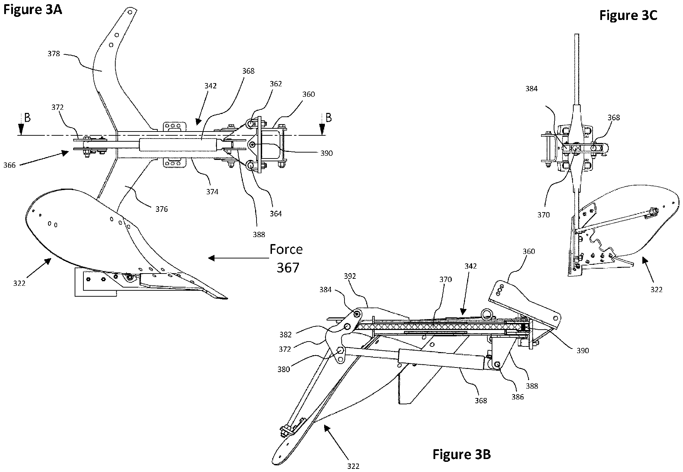

Each of the beam attachment brackets 70, 72, 74, 76, 78, best shown in Figure 1C, is connected, on a first side, to the main frame 12 and, on a second side, to one of the beams 42, 44, 46, 48, 50. The beams 42, 44, 46, 48, 50 are pivotable about horizontal hinge joints of the beam attachment brackets 70, 72, 74, 76, 78 as will described in more detail with reference to Figures 3A to 3C.

To avoid pivotal movement of the beams 42, 44, 46, 48, 50 and thus also a withdrawal of the corresponding plough bodies 22a to 30b from the soil during normal operation, i.e. when no subterranean obstacle is encountered, the beams are biased into a working position (horizontal position shown in Figure 1A) by means of hydraulic actuators 82, 84, 86, 88, and 90. Depending on the hydraulic pressure within hydraulic actuators 82 to 90, a bias-force is applied to the beams 42 to 50 biasing the beams into their working position (horizontal position in Figure 1A). A pivotal movement of the beams 42 to 50 is only possible if the bias-force of the hydraulic actuators 82 to 90 is overcome by a drag-force experienced by the plough bodies 22a to 30b working the soil. The bias-force of the hydraulic actuators 82 to 90 is adjusted such that the drag-force experienced by the plough bodies 22a to 30b is only overcome if significant obstacles are encountered.

Each of the hydraulic actuators 82 to 90 may be connected to an individual accumulator. Alternatively, or additionally, the hydraulic actuators 82 to 90 may be connected to a common hydraulic accumulator.

Each of the pairs of plough bodies 22a, 22b, 24a, 24b, 26a, 26b, 28a, 28b, 30a, 30b is designed to create a furrow in the field when the plough is dragged behind or pushed by an agricultural work vehicle such as a tractor. It follows that each run of the illustrated plough 10 through a field creates five adjacent furrows.

Skimmers 32a, 32b, 34a, 34b, 36a, 36b, 38a, 38b, 40a, 40b are attached in front of the plough bodies 22a, 22b, 24a, 24b, 26a, 26b, 28a, 28b, 30a, 30b. A first pair of skimmers 32a, 32b is arranged in front the first pair of plough bodies 22a, 22b. A second pair of skimmers 34a, 34b is arranged in front of the second pair of plough bodies 24a, 24b. A third pair of skimmers 36a, 36b is attached in front of the third pair of plough bodies 26a, 26b. A fourth pair of skimmers 38a, 38b is attached in front of the fourth pair of plough bodies 28a, 28b. A fifth pair of skimmers 40a, 40b is attached in front of the fifth pair of plough bodies 30a, 30b.

The skimmers 32a, 32b, 34a, 34b, 36a, 36b, 38a, 38b, 40a, 40b are arranged higher than their corresponding plough bodies 22a, 22b, 24a, 24b, 26a, 26b, 28a, 28b, 30a, 30b to not penetrate the soil as far as the plough bodies. It follows that the skimmers 32a, 32b, 34a, 34b, 36a, 36b, 38a, 38b, 40a, 40b are configured to only lift a top layer off the ground surface before the soil is turned over by the plough body that is arranged immediately behind the skimmer.

Each pair of skimmers 32a, 32b, 34a, 34b, 36a, 36b, 38a, 38b, 40a, 40b is attached to the main frame 12 by means of a corresponding mounting assembly 52, 54, 56, 58, 60.

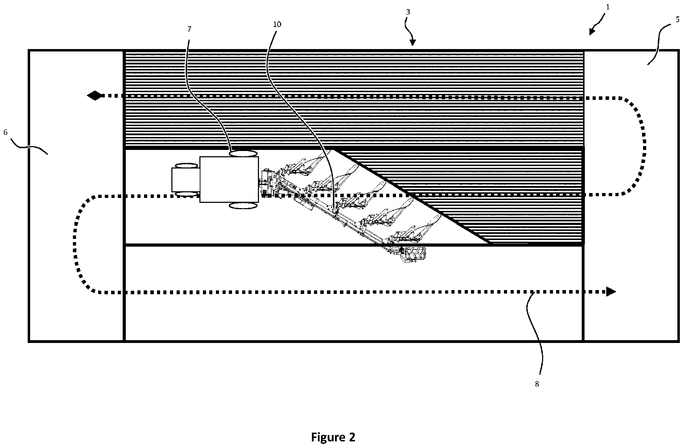

Turning to Figure 2, a typical operation of agricultural machinery comprising a tractor 7 and a plough 10 is described. In use, the plough 10 is drawn as an attachment (implement) behind a towing vehicle (e.g. tractor 7). It will be appreciated that it is equivalently feasible to locate the plough 10 in front or both in front and behind the tractor 7.

Figure 2 shows a schematic work area 1, e.g. a crop field, which is divided into a main field 3 and headlands 5,6. A tractor 7 draws the plough 10 across the main field 3 in generally parallel working rows. The working rows are part of the trajectory of the tractor and typically run in parallel with a long edge of the work area 1. Each working row represents an individual run of the agricultural machinery across the field between headlands 5 and 6. As will be described in more detail below, a five-furrow plough, such as the exemplary plough shown in Figures 1A to 1C creates a total of five furrows per run.

At the end of each run/working row the tractor 7 and plough 10 use the upcoming headland 5 or 6 for turning around, as indicated by trajectory 8. It is known in the art that the soil of the headlands 5, 6 is subject to greater levels of soil compaction as it receives more traffic per unit area than the main field 3. In order not to disturb the soil of the headlands 5 and 6 more than necessary, it is known to lift the ground engaging tools, such as the plough bodies and the skimmers, off the ground into a headland or transfer position, just before the plough 10 reaches the headlands 5 or 6 respectively. Once the tractor 7 and the corresponding plough 10 have turned on the headland 5, 6, the ground engaging tools of the plough 10 are, again, lowered towards an operating position to engage the soil of the main field 3.

In the illustration of Figure 2, the plough 10 is working on the main field 3 and, therefore, is arranged in the operating position. As the plough 10 reaches the border between the headland 5/6 and the main field 3, the plough 10 is transferred to a transfer position. It follows that each working row starts with an adjustment of the plough from the transfer position into the operating position and ends with an adjustment of the plough from the operating position into the transfer position.

The plough 10 shown in Figures 1A to 1C is of the fully-mounted type. In fully-mounted ploughs, the weight of the plough is carried exclusively by the tractor, when the plough is in its transfer position (on the headlands). In other words, the plough is then exclusively supported by the tractor 7 via headstock 14 and maybe lifted off the ground with a lift cylinder of a tractor linkage.

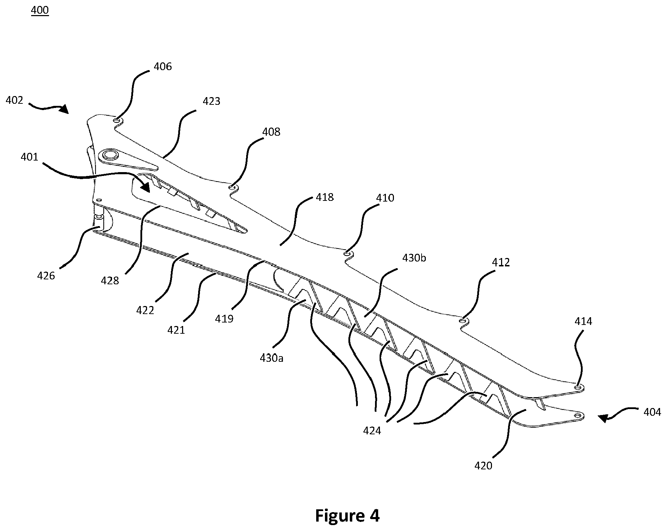

During the turning movement on the headlands, the plough 10 is also reversed. That is, the main frame 12 is rotated by about 180 degrees with respect to the headstock 14 to move the plough from a first configuration to a second configuration. It will be appreciated that if the operator is ploughing in the furrow (as shown in Figure 4), then the main frame 12 may not be rotated by exactly 180 degrees, it is more likely to be 190-200 degrees or 160-170 degrees depending on which direction the main frame 12 turns. If the operator is ploughing on-land, then the main frame 12 may be rotated by an angle that is closer to 180 degrees, perhaps exactly 180 degrees.

In its first configuration shown in Figures 1A to 1C, the plough 10 is set up such that a first plurality of ground engaging tools, such as plough bodies 22a, 24a, 26a, 28a, and 30a, are in contact with the soil. In its second configuration (not illustrated), the plough 10 is set up such that a second plurality of ground engaging tool, such as plough bodies 22b, 24b, 26b, 28b, and 30b, are in contact with the soil.

Tilling the field with the plough 10 in this first configuration provides a first furrow created by the first plough body 22a, a second furrow created by the second plough body 24a, a third furrow created by the third plough body 26a, a fourth furrow created by the fourth plough body 28a, and a fifth furrow created by the fifth plough body 30a. A furrow width is determined by the lateral distance d between the plough bodies 22a, 22b, 24a, 24b, 26a, 26b, 28a, 28b, 30a, 30b, as illustrated in Figure 1C.

As the reversible plough 10 reaches the end of the first run, the main frame 12 is rotated by 180 degrees (reversed) with respect to the headstock 14. A turning cylinder (not shown), attached to the headstock 14 is typically used to rotate (reverse) the plough 10. During rotation of the main frame, the first set of plough bodies, e.g. 22a, 24a, 26a, 28a, 30a, are transferred to the top of the plough 10. At the same time, the second set of plough bodies e.g. 22b, 24b, 26b, 28b, 30b, that were not in use in the previous run is then transferred to the lower end of the plough 10 and will be submerged in the soil during the next run. The reversible plough is then in its second configuration (not shown).

Executing a second run of the field with the plough 10 in this second configuration provides a first furrow created by the sixth plough body 22b, a second furrow created by the seventh plough body 24b, a third furrow created by the eighth plough body 26b, a fourth furrow created by the ninth plough body 28b, and a fifth furrow created by the tenth plough body 30b.

Reversing the plough 10 between consecutive runs has the advantage that the plough bodies 22a, 22b, 24a, 24b, 26a, 26b, 28a, 28b, 30a, 30b that engage the soil always face the same end of the field, irrespective of the tractor's orientation.

In both configurations of the plough implement 10 the main frame 12 is supported by an implement wheel 20. The implement wheel 20 is arranged at the back end 18 of the plough implement 10. Since the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b are generally fixed to the main frame via beams 42, 44 46, 48 and 50 or rails 52, 54, 56, 58, 60, there is no possibility of adjusting the working depth of said ground engaging tools without changing the ground clearance of the main frame 12. To this end, the plough 10 shown in Figures 1A to 1C includes implement wheel 20, which acts as a depth wheel to adjust the ground clearance of the main frame 12. A linkage 62 provided between the implement wheel 20 and the main frame 12 allows the operator to lift or lower the main frame 12 with respect to a ground surface 80. The linkage 62 may be connected to an actuator, e.g. a hydraulic cylinder (not shown), for adjusting the distance between the implement wheel 20 and the main frame, thereby lifting and lowering the main frame. The linkage 62 and the actuator together form a depth adjustment apparatus for the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b. Since the position of the plurality of first and second ground engaging tools is fixed with respect to the main frame 12, any change in the main frame's ground clearance will also affect the working depth of the plurality first and second ground engaging tools. In particular, if the main frame 12 is lowered by shortening the linkage 62 between implement wheel 20 and the main frame 12, then the working depth of the plurality of first ground engaging tools shown in Figures 1A to 1C is increased, i.e. the plurality of first ground engaging tools are lowered further into/towards the soil. If the main frame 12 is lifted, by extending the linkage 62 between implement wheel 20 and the main frame 12, then the working depth of the plurality of first ground engaging tools is decreased, i.e. the plurality of first ground engagement tools are either raised or completely pulled out of the soil. It will be appreciated that extending and retracting the linkage 62 will mainly raise or lower the back end of the plough implement 10. In order to evenly raise the front and the back end of the plough implement 10, the headstock 14 may be raised or lowered together with an adjustment of the linkage 62 of the implement wheel 20. Raising or lowering the headstock may be achieved by means of hydraulic cylinders connected to lifting arms of the agricultural work vehicle that carry the headstock 14.

Figures 3A, 3B and 3C illustrate part of a plough that includes a stone trip mechanism for a plough body 322 and a corresponding beam 342, where the plough body 322 is in a working position. Figure 3A shows a side view, Figure 3B shows a cross-sectional view along the line B-B in Figure 3A, and Figure 3C shows an end view from a distal end of the beam 342.

The beam 342 connects the plough body 322 to a main frame (not shown) of a reversible plough. The plough body 322 is an example of a ground engaging tool. These figures show a beam attachment bracket 360 that provides a mechanical connection between the beam 342 and the frame. The beam 342 is pivotally connected to the beam attachment bracket 360, and therefore is also pivotally connected to the frame. The beam attachment bracket 360 has two hinge joints 362, 364, one of which is usable for each of the first and second configurations of the reversible plough.

The beam 342 has a substantially Y-shaped structure, which includes a central portion 374, a first beam arm 376 and a second beam arm 378. The central portion 374 of the beam 342 has a proximal end that is pivotally connected to the beam attachment bracket 360, and a distal end. The two beam arms 376, 378 extend from the distal end of the beam 342. The first beam arm 376 connects the plough body 322 to the central portion 374 of the beam 342. The second beam arm 378 connects a second plough body (not shown to assist with the clarity of the illustration) to the central portion 374 of the beam 342. The plough body 322 can be used to engage the soil and work the field when the reversible plough is in the first configuration. The second plough body (not shown) can be used to engage the soil and work the field when the reversible plough is in the second configuration.

Figures 3A, 3B and 3C also show an actuator mechanism 366 that provides a bias force to the beam 342 such that the plough body 322 is biased towards the working position. The actuator mechanism shown in these figures can also be referred to as a stone trip mechanism. The bias force can be set such that when the plough body 322 is being pulled through soil as the plough is working the field, the plough body 322 maintains its intended orientation. That is, the bias force applied by the actuator mechanism 366 overcomes the reactive force 367 experienced by the plough body as it moves through the soil. However, if the plough body 322 were to hit a stone or other obstruction buried under the ground, then the additional force that is applied to the plough body by the stone is able to overcome the bias force applied by the actuator mechanism such that the beam 342 can pivot about one of the horizontal hinge joints 362, 364. When the beam 342 pivots in this way, the plough body 322 moves upwards such that it is above the stone. Therefore, the ploughing operation does not need to stop when a stone is experienced by the plough body 322. Once the plough body 322 has passed the stone, the bias force applied by the actuator mechanism returns the plough body 322 to its working position.

The actuator mechanism 366 includes a cylinder 368, a connection bar 370 and a linkage 372. The connection bar 370 in this example is mainly located in a cavity that is inside the central portion 374 of the beam 342. In this way, the central portion 374 of the beam 342 can be considered as a sleeve around the connection bar 370. Most of the length of the connection bar 370 is visible in the cross-sectional view of Figure 3B, and an end of the connection bar 370 is also visible in Figure 3C. In Figure 3A, the connection bar 370 is obscured by the cylinder 368 and the beam 342.

In this example, the beam 342 includes a cylinder mounting region (lug) 388 at the proximal end of the central portion 374 of the beam 342, and a linkage mounting region (lug) 392 at the distal end of the central portion 374 of the beam 342. As shown in Figure 3B, the cylinder mounting region 388 and the linkage mounting region 392 extend from opposite sides of the beam 342 such that they are laterally offset from each other at opposite ends of the connection bar 370.

A first end of the linkage 372 is connected to the linkage mounting region 392 at a linkage-beam connection point 384. In this way, the first end of the linkage 372 can rotate relative to the beam 342, but cannot experience a translational movement relative to the beam 342. A second end of the linkage 372 is connected to a first end of the cylinder 368 at a linkage-cylinder connection point 380. A second end of the cylinder 368 is connected to the cylinder mounting region 388 at a cylinder-beam connection point 386. A first end of the connection bar 370 is connected to the beam attachment bracket 360 (and therefore also the frame) at a bar-frame connection point 390. A second end of the connection bar 370 is pivotally connected to a mid-point of the linkage 372 at a bar-linkage connection point 382. That is, the bar-linkage connection point 382 is between the linkage-beam pivot point 384 and the linkage-cylinder connection point 380, along a longitudinal direction of the linkage 372.

In this example, the linkage-beam connection point 384, the linkage-cylinder connection point 380, the cylinder-beam connection point 386, the bar-frame connection point 390 and the bar-linkage connection point 382 are all pivot points such that the two associated components are rotatable relative to each other. It will be appreciated that in other examples, one or more of these connection points can be rigid connections that do not allow for relative rotational movement, and that any non-linear or rotational movement can be accommodated by other components in the actuator mechanism 366.

An accumulator (not shown in Figures 3A-3C) maintains a pressure of the fluid in the cylinder 368 when the ground engaging tool 322 is in its working position. The pressure in the cylinder 368 attempts to push the second end of the linkage 372 away from the cylinder mounting region 388, such that it would rotate about the bar-linkage connection point 382 and push the linkage-beam pivot point 384 back towards the beam attachment bracket 360. In this way, the central portion 374 of the beam 342 is biased along the connection bar such that it abuts the beam attachment bracket 360. Therefore, the bias force applied by the cylinder 368 acts to maintain the beam 342 in its current, working, position with respect to the beam attachment bracket 360.

Figure 4 shows a main frame 400 for an agricultural implement, such as the plough 10. As will be described in more detail below, the main frame 400 is configured to receive one or more beam attachment brackets (not shown) for connecting one or more beams (not shown) to the main frame 400.

The main frame 400 has a first end 402 that may be connected to the headstock 14 of the plough 10, for example, by a linkage arrangement (not shown). The main frame 400 extends from the first end 402 towards an opposite, second end 404. In one example, an implement wheel (not shown) may be attached to the main frame 400 at the second end 404, similar to the implement wheel 20 of Figures 1A to 1C. Although the main frame is depicted as having open ends at the first and second end 402, 404, it will be appreciated that one or both ends of the main frame 400 may equally be closed.

A cavity 401 is defined by the main frame 400 and extends between the first end 402 and the second end 404. It should be understood that the cavity may not extend all the way between the first and second ends 402, 404 of the main frame 400. Rather, the cavity 401 may extend along a section of the frame between the first and second ends 402, 404. In other words, the cavity may extend partly or fully along the longitudinal length of the main frame 400.

The main frame 400 comprises a first wall 418 and an opposite second wall 420. In the embodiment of Figure 4, both walls 418, 420 have substantially the same shape. When in use, the main frame 400 will be connected to the headstock such that the first wall 418 will be an upper wall in the first configuration of the plough, whereas the second wall 420 will be a lower wall in the first configuration. When the plough is rotated (reversed) to its second configuration, the second wall 420 will become the upper wall, whereas the first wall 418 will become a lower wall.

The first wall 418 and the second wall 420 are connected by a third wall 422 that extends perpendicular to the first and second walls 418, 420. The third wall 422 connects a first side edge 419 of the first wall 418 with a first side edge 421 of the second wall 420. The third wall 422 is solid for parts of the length of the main frame 400. Other parts of the third wall 422 include voids 430a, 430b that create a partially open wall structure of the third wall 422. The voids 430a, 430b of the third wall 422 allow access to the inside cavity 401 of the frame 400 between the first and second walls 418, 420.

The voids 430a, 430b create substantially V-shaped struts 424 that form part of the third wall 422 and connect the first and second walls 418, 420 along their respective first side edges 419, 421. A first plurality of voids 430a are arranged between the two side of the V-shaped struts 424. A second plurality of voids 430b are arranged between adjacent V-shaped struts 424. Of course, the voids 430a, 430b could have any other shape and, thus, create struts of various different shapes. In some embodiments, the third wall may not have any voids at all.

A fourth wall (not shown) may extend on the other side of the main frame 400, opposite to the third wall 422 and connect the first and second walls 418, 420. The fourth wall connects a second side edge 423 of the first wall 418 with a second side edge (not shown) of the second wall 420. The fourth wall may thus be described as an intermediate wall. The second side edges of the first and second walls 418, 420, that are connected by the fourth wall include one or more pairs of lugs as will be explained in more detail below. The fourth wall includes one or more voids to allow access to the inside of the cavity 401. In the example of Figure 4, the fourth wall includes voids that are similar to the voids 430a, 430b of the third wall 422 described above and create V-shaped struts. It should be noted, however that the one or more voids of the fourth wall may have any shape, as long as they allow access for link members of the beam attachment brackets that will be described in more detail below. The number of voids in the fourth wall should at least equal the number of beam attachment brackets used to connect the beams to the main frame 400.

The main frame 400 of Figure 4 further includes a first opening 428 arranged between the first end 402 and second end 404 of the main frame 400. In particular, the first opening 428 is provided in the first wall 418 to create an aperture for granting access to the cavity 401 from the outside of the main frame 400. In the embodiment of Figure 4, the first opening 428 is a cut-out arranged in the first wall 418. The first opening 418 allows access to the cavity 401 for insertion or removal of hydraulic ducts or electrical wires, or for maintenance work on parts within the cavity 401. The first opening 428 of this embodiment is arranged at the first end 402 of the main frame 400. A removable cover (not shown) may be provided to cover the first opening 418 when not in use to protect the inside of the cavity 401 during operation of the plough.

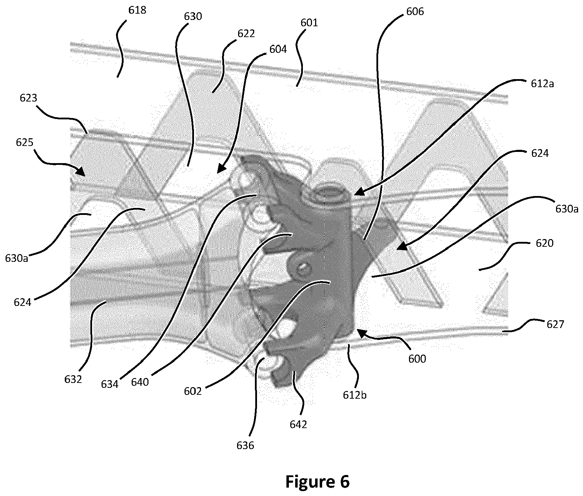

The main frame 400 of Figure 4 comprises five pairs lugs 406, 408, 410, 412, 414 (only one lug of the pair shown). Figure 4 shows lugs 406, 408, 410, 412, 414 that are part of the first wall 418. However, it will be appreciated that corresponding lugs are arranged on the opposite, second wall 420 (see Figure 6). Each of the pairs of lugs 406, 408, 410, 412, 414 is capable of supporting a beam attachment bracket (not shown), as will be discussed in more detail below. The beam attachment brackets support beams, which in turn support the plough bodies, in a similar manner to the illustrations shown in Figures 3A to 3C.

A first lug 406 may be used to pivotably attach a first beam attachment bracket to the main frame 400. A second lug 408 may be used to pivotably attach a second beam attachment bracket to the main frame 400. A third lug 410 may be used to pivotably attach a third beam attachment bracket to the main frame. A fourth lug 412 may be used to pivotably attach a fourth beam attachment bracket to the main frame 400. A fifth lug 414 may be used to pivotably attach a fifth beam attachment bracket to the main frame 400. In the embodiment of Figure 4, the five lugs 406, 408, 410, 412, 414 are equidistantly distributed along the length of the main frame 400 between its first end 402 and its second end 404. Each of the five lugs 406, 408, 410, 412, 414 protrudes from a second side edge 423 of the first wall 418. Generally, the number of lugs 406, 408, 410, 412, 414 should equal the number of beams to be attached to the main frame 400.

The main frame has a cross-section that changes along the length of the main frame 400 between the first end 402 and second end 404. In the embodiment of Figure 4, the cross-section of the main frame 400 increases between the first lug 406 and the second lug 408 until it reaches an intermediate point along the length of the main frame 400 at which the cross-section starts to decrease. From the intermediate point towards the second end 404, the cross-section of the main frame 400 reduces in size continuously. The stiffness of the main frame 400 may be directly proportional to the size of its cross-section. Accordingly, in the embodiment of Figure 4, the main frames 400 stiffness increases from the first end 402 towards the intermediate point.

An actuator-attachment-fixture 426 is arranged between the first and second walls 418, 420 at the intermediate point. The actuator-attachment-fixture 426 is able to receive one end of an actuator (not shown) that is configured to move the main frame 400, when in use. The actuator may be a hydraulic actuator, more particularly a hydraulic cylinder used to change the angle of the main frame 400 with respect to the headstock 14. Changing the angle of the main frame 400 with respect to the headstock results in an adjustment of the ploughing width. Accordingly, the hydraulic actuator that may be attached to one end to the actuator-attachment-fixture 426 may be a width adjustment actuator.

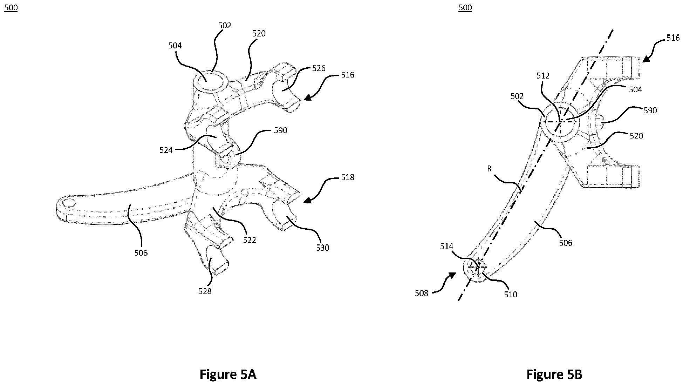

Turning to Figures 5A and 5B, there are shown different views of a beam attachment bracket 500 according to an embodiment of the present disclosure. Figure 5A shows a perspective view of the beam attachment bracket 500. Figure 5B shows a top view of the beam attachment bracket 500.

As mentioned above, the beam attachment bracket 500 is configured to pivotally connect the beams of an agricultural implement, such as the agricultural plough 10, to a corresponding main frame. The beam attachment bracket comprises a pivot bushing 502. The pivot bushing 502 defines an opening, particularly a bore 504, extending between opposite ends of the pivot bushing 502. In use, the beam attachment bracket 500 is arranged in such a way that the bore 504 of the pivot bushing 502 extends in a substantially vertical direction.

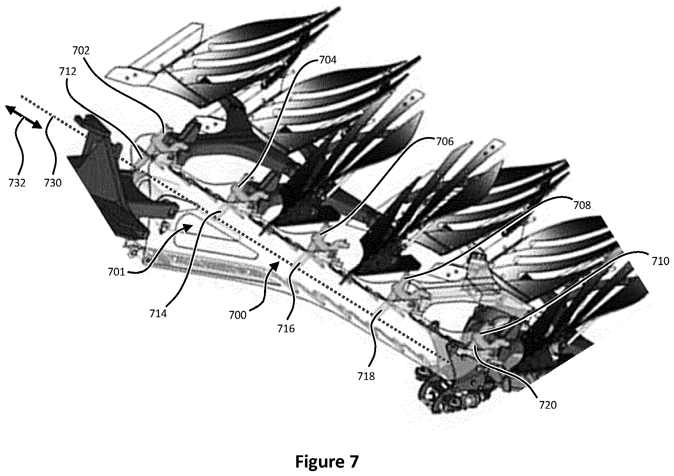

The beam attachment bracket 500 further comprises a link member 506. As will be explained in more detail with reference to Figure 7, the link member 506 may function as a lever that can be manipulated (e.g. by an actuator attached to the distal end of the link member 506) to change the angle of the beam (that will be connected to the beam attachment bracket) with respect to the main frame. The link member 506 extends in a substantially radial direction from the pivot bushing 502. In particular, the link member 506 extends in a substantially radial direction from a longitudinal axis 512 of the bore 504 of the pivot bushing 502. A first end of the link member 506 is connected to the pivot bushing 502. An opposite, second end 508 of the link member 506 is radially distanced from the pivot bushing 502. At the second end 508 of the link member 506, the link member 506 comprises an opening, particularly a bore 510. As will be described in more detail below, the bore 510 is suitable for connecting the link member 506 to a stay arranged (at least partly) within an inner cavity of the main frame.

The link member 506 extends substantially radially from the pivot bushing 502. In particular, the longitudinal axis 512 of the bore 504 of the pivot bushing 502 is connected to a longitudinal axis 514 of the bore 510 of the link member 506 via a radial axis R. Accordingly, the term *"substantially radially*" in this specification refers to any shape of the link member 506 that extends radially outwards from the pivot bushing 502. In this example, the link member 506 encloses the radial axis R between the longitudinal axes 512, 514 of the bores 504, 510. As will be appreciated, the link member 506 shown in Figure 5B encloses the radial axis R, despite the link member 506 being slightly curved.

In the embodiment of Figures 5A and 5B, the link member 506 is formed together with the pivot bushing 502 as a one-piece structure. However, it is also feasible to removably attach the link member to the pivot bushing. The beam attachment bracket 500 is preferably made of steel, such that a one-piece construction between the pivot bushing and the link member 506 exhibits sufficient strength. This is particularly beneficial in plough applications, in which the link member 506 will be used to pivot a relatively heavy beam causing significant amounts of stress on the link member 506.

The beam attachment bracket 500 comprises a first hinge receptacle 516. As will be explained in more detail below, the first hinge receptacle 516 is adapted to form a first hinge joint, together with a corresponding first hinge cylinder of a corresponding beam. The first hinge receptacle 516 facilitates a pivoting movement of a corresponding beam about the first hinge receptacle 516 when the frame is in its first configuration. In the first configuration of the frame, the first hinge receptacle 516 may be arranged as represented in Figure 5A, i.e. above a second hinge receptacle 518. In other words, in the first configuration of the main frame, the first hinge receptacle 516 may be an upper hinge receptacle.

The beam attachment bracket 500 comprises a second hinge receptacle 518 connected to the pivot bushing 502. The second hinge receptacle 518 is arranged at an opposite end of the pivot bushing 502 with respect to the first hinge receptacle 518. In use, the second hinge receptacle is configured to form a second hinge joint together with a second hinge cylinder of a corresponding beam. Accordingly, the second hinge receptacle 518 facilitates a pivoting movement of a corresponding beam about the second hinge receptacle 518, when the frame is in a second configuration. In the second configuration of the main frame, the beam attachment bracket 500 is turned upside-down. In other words, in this second configuration of the frame, the second hinge receptacle will be arranged above the first hinge receptacle 516. Accordingly, the second hinge receptacle 518 will then be an upper hinge receptacle in the second configuration of the frame.

Both the first and second hinge receptacles 516, 518 are formed as a one-piece structure together with the pivot bushing 502. Constructing the pivot bushings and the first and/or the second hinge receptacles as one-piece structures significantly increases the stability of the connection between the beams and the main frame.

Both the first and second hinge receptacles 516, 518 of Figures 5A and 5B comprise a U-shaped base portion 520, 522. A first U-shaped base portion 520 connects first and second concave receptacles 524, 526 of the first hinge receptacle 516 to the pivot bushing 502. A second U-shaped base portion 522 connects first and second concave receptacles 528, 530 to the pivot bushing 502. The first and second U-shaped base portions 520, 522 provide a reliable/stable connection between the concave receptacles 524, 526, 528, 530 and the pivot bushing 502.

A bar-frame connection point 590 is arranged on an outer surface of the pivot bushing 502, between the first and second hinge receptacles 516, 518. The bar-frame connection point 590 is functionally identical to the bar-frame connection point 390 discussed with reference to Figures 3A and 3B.

Figure 6 shows an enlarged view of a beam attachment bracket 600 pivotally connected to a main frame 601. In Figure 6, only parts of the main frame 601 are shown. The main frame comprises a first wall 618 and a second, opposite wall 620. The main frame 601 further comprises a third wall 622 extending substantially perpendicularly to the first and second wall 618, 620. The third wall 622 connects first side edges of the first and second wall 618, 620. A fourth wall 625 is arranged opposite to the second wall 622. The fourth wall extends substantially perpendicularly to the first and second walls 618, 620. The fourth wall 625 connects the first and second walls 618, 620 at opposite side edges 623, 627 to the third wall 622. The third and fourth walls 622, 625 may thus be described as intermediate walls.

The first and second walls 618, 620 each comprise a first lug 612a, 612b. A first lug 612a is integrally formed with the first wall 618. A first lug 612b is integrally formed with the second wall 620. The first lugs 612a, 612b protrude over the fourth side wall 625.

The beam attachment bracket 600 of Figure 6 has substantially the same shape as the bracket 500 shown in Figures 5A and 5B. The beam attachment bracket 600 is connected to the main frame 601 via a pivot pin (not shown) that extends through the bore of the pivot bushing 602 and openings of the pair of first lugs 612a, 612b of the main frame 601. The pivot pin may either be rotatably received within the bore of the pivot bushing 602 and fixed to the lugs or rotatably received within the openings of the first lugs 612a, 612b and rotatably fixed in the pivot bushing 602. Accordingly, the beam attachment bracket 600 is pivotally connected to the main frame 601 via the pivot pin.

The beam attachment bracket 600 in Figure 6 is arranged between the first and second walls 618, 620 of the main frame. In particular, the pivot bushing 602 of the beam attachment bracket 600 is arranged between inner surfaces of the pair of lugs 612a, 612b.

The fourth wall 625 of Figure 6 comprises a plurality of voids 630a, 630b. The voids 630a, 630b create substantially V-shaped struts 624 that form part of the third wall 625 and connect the first and second walls 618, 620 along their first side edges 623, 627. A first plurality of voids 630a are arranged between the two sides of the V-shaped struts 624. A second plurality of voids 630b are arranged between adjacent V-shaped struts 624.

In the embodiment of Figure 6, the link member 606 of the beam attachment bracket 600 extends into the inner cavity 604 of the main frame 601. In particular, the link member 606 extends through one of the voids 630a between the sides of one of the V-shaped struts 624 of the third wall 625. It will be appreciated, however, that the shape and size of the void through which the link member 606 extends is somewhat arbitrary; what is important is that it allows the link member 606 to extend from the outside of the frame into the cavity. It should also be understood that the fourth side wall 625 may comprise no more than one opening/void per beam attachment bracket 600. This at least one opening/void would then be sized to accommodate the link member 606 of the beam attachment bracket 600.

The link member 606 extending into the inner cavity 604 of the main frame has various advantages. Firstly, the cavity 604 of the main frame 601 may be used to actuate the beam attachment brackets, e.g. via a stay received within the frame, as will be explained in more detail with reference to Figure 7. The void through which the link member 606 extends into the cavity 604 should be large enough to allow for pivotal movement of the link member 606 together with the pivot bushing 602. Accordingly, the voids can be sized to limit pivotal movement of the pivot bushing 602. In other words, the sides of the voids may act as abutments for the link member 606 to limit the pivotal movement to a predetermined range of motion. The design of a link member 606 extending inside the inner cavity 604 of the main frame 601, therefore, also provides for integrated end stops for the pivotal movement.

A beam 632 is schematically represented in Figure 6. The beam 632 is connected to the beam attachment bracket 600. In particular, a first hinge cylinder 634 is connected to the first hinge receptacle 640 of the beam attachment bracket 600. A second hinge cylinder 636 of the beam 632 is connected to the second hinge receptacle 642 of the beam attachment bracket 600. The first hinge receptacle 640 and the first hinge cylinder 634 together form a first hinge joint, similar to the hinge joint 362 shown in Figure 3A. The second hinge receptacle 642 and the second hinge cylinder 636 together form a second hinge joint, similar to the hinge joint 364 shown in Figure 3A. In use, this will allow the beam 632 to pivot in a vertical plane (up and down) with respect to the beam attachment bracket 600 and thus with respect to the frame.

As will be appreciated, the beam 632, and thus also the ground engaging tools connected to the beam 632, is also pivotable with respect to the main frame 601 in a horizontal plane. During the pivotal movement in the horizonal plane, the beam pivots together with the beam attachment bracket 600. In other words, the beam 632 may pivot together with the beam attachment bracket 600 about a longitudinal axis of the pivot pin. Pivotal movement of the beam 632 together with the beam attachment bracket 600 may be caused by applying a force to the link member 606. In particular, if the link member 606 is moved within the cavity 601, this movement will result in a pivoting action of the beam attachment bracket 600 with respect to the main frame 601 about the pivot pin.

In order to move the link member 606 and thus pivot the beam attachment bracket 600 and the beam 632 with respect to the main frame 601, the link member 606 may be connected to an actuator. In one embodiment, the main frame may comprise several beam attachment brackets, e.g. one beam attachment bracket per beam. For example, in a five furrow plough, the main frame may comprise five beam attachment brackets connected to the main frame. Each of the beam attachment brackets may have a link member extending into the cavity 604 of the main frame and being connected to a separate actuator. In this embodiment, each of the beam attachment brackets (and beams) can be pivoted individually, irrespective of the pivoting movement of the other beam attachment brackets (and beams).

Turning to Figure 7, there is shown another embodiment in which a plurality of beam attachment brackets 702, 704, 706, 708, 710 are connected to a main frame 700. Each of the beam attachment brackets 702, 704, 706, 708, 710 comprises a link member 712, 714, 716, 718, 720 protruding into an inner cavity 701 of the main frame 700.

In the embodiment of Figure 7, movement of the beam attachment brackets 702, 704, 706, 708, 710 via their respective link members 712, 714, 716, 718, 720 is synchronised. To this end, a stay, which is schematically illustrated by a dotted line 730, is arranged within the at least one cavity 701 of the main frame 700. The stay, represented by the dotted line 730, is connected to each of the link members 712 to 720. In particular, the stay is connected to openings arranged at a second end of the link members 712 to 720, similar to the opening 510 shown in Figure 5B. The stay may be moveable, by means of a suitable actuator or linkage system, in the direction 732 shown in Figure 7. As the stay moves relative to the main frame 700 in the direction 732, all of the link members 712 to 720 will be displaced simultaneously, causing a simultaneous pivoting movement of their respective beam attachment brackets 702 to 710. It will be appreciated that, in this embodiment, only one actuator is required to move each of the beam attachment brackets 702 to 710 and their respective beams at the same time.

In other embodiments, the stay 730 may be permanently fixed or temporarily fixable to the frame, such that a pivotal movement of the beam attachment brackets 702 to 710 is permanently or temporarily disabled.

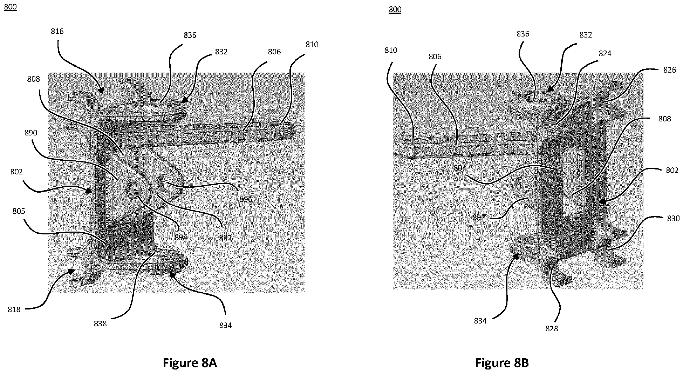

Figures 8A and 8B show a second embodiment of the beam attachment bracket according to the present disclosure. As will be described in more detail below, the main difference between the bracket shown in Figures 8A and 8B and the embodiment of the beam attachment bracket shown in Figures 5A and 5B is that the beam attachment bracket 800 is configured to be attached to an outer surface of the main frame. By contrast, and as has been described with reference to Figure 6, for example, the beam attachment bracket 500 shown in Figures 5A and 5B is configured to be attached between inner surfaces of the first and second walls (618, 620, Figure 6) of the main frame. This has several benefits, such as increased stability of the connection between the beam and the main frame and the possibility of an overall lighter attachment beam bracket.

The beam attachment bracket 800 according to the embodiment shown in Figures 8A and 8B comprises a base plate 802. The base plate 802 in the example shown in Figures 8A and 8B is substantially flat. However, it will be appreciated that this may not always be the case. For example, reinforcement structures (e.g. localised thickening portions) may be provided to increase the stability of the base plate 802.

The base plate 802 comprises a first surface 804 (Figure 8B) and a second surface 805 (Figure 8A). The first surface 804 is arranged opposite to the second surface 805 of the base plate 802. In use, the first surface 804 faces the beam, whereas the opposite, second surface 805 generally faces in the direction of the main frame.

The beam attachment bracket 800 comprises a first hinge receptacle 816. The first hinge receptacle 816 is adapted to form a first hinge joint together with a corresponding first hinge cylinder of a corresponding beam. The first hinge receptacle 816, therefore, facilitates a pivoting movement of a corresponding beam about the first hinge receptacle, when the main frame is in its first configuration. In the first configuration of the main frame, the first hinge receptacle 816 may be arranged as represented in Figures 8A and 8B, i.e. above a second hinge receptacle 818. In other words, in the first configuration of the main frame, the first hinge receptacle 816 may be an upper hinge receptacle.

The beam attachment bracket 800 comprises a second hinge receptacle 818. The second hinge receptacle is configured to form a second hinge joint together with a second hinge cylinder of a corresponding beam. Accordingly, the second hinge receptacle 818 facilitates a pivoting movement of a corresponding beam about the second hinge receptacle 818, when the frame is in a second configuration. In the second configuration of the main frame, the beam attachment bracket 800 is turned upside-down. In other words, in this second configuration of the frame, the second hinge receptacle 818 will be arranged above the first hinge receptacle 816. Accordingly, the second hinge receptacle 818 will be an upper hinge receptacle in the second configuration of the frame.

The first hinge receptacle 816 is connected to the first surface 804 of the base plate 802. The second hinge receptacle 818 is connected to the first surface 804 of the base plate 802. The first and second hinge receptacles, 816, 818, are arranged on opposite ends of the base plate 802. In the embodiment shown in Figures 8A and 8B, the first and second hinge receptacles are integrally formed with the base plate 802.

The first hinge receptacle 816 comprises first and second concave receptacles 824, 826. The first and second concave receptacles 824, 826 of the first hinge receptacle 816 are arranged on opposite sides of the base plate 802. The second hinge receptacle 818 comprises first and second concave receptacles 828, 830. The first and second concave receptacles 828, 830 of the second hinge receptacle 818, are arranged on opposite sides of the base plate 802.

The base plate comprises an opening, particularly a connection-bar opening 808 extending between its first and second surfaces 804, 805. The opening 808 of the embodiment shown in Figures 8A and 8B is substantially rectangular in shape. However, it should be appreciated that any size and shape is generally feasible, as far as it allows the connection-bar to pivot with respect to the beam attachment bracket, e.g. when the stone trip mechanism is triggered, and the beam is pivoted with respect to the main frame.

The beam attachment bracket 800 further comprises a link member 806. The link member 806 is configured to extend at least partly into an inner cavity of the main frame, when in use. Similar to the link member 506, explained with reference to Figures 5A and 5B, the link member 806 may function as a lever that can be manipulated (e.g. by an actuator attached to the distal end of the link member 806) to change the angle of the beam with respect to the main frame. A first end of the link member 806 is connected to the second surface 805 of the base plate 802. An opposite, second end of the link member 806 is provided with an opening, particularly a bore 810. Similar to the bore 510 described with reference to Figures 5A and 5B, the bore 810 is suitable for connecting the link member 806 to a stay or any other actuator. The link member 806 is integrally formed together with the base plate 802 as a one-piece structure. However, it is also feasible to removably attach the link member to the base plate 802.

The beam attachment bracket 800 comprises a first lug 890 and a second lug 892. The first lug defines a first lug opening 894. The second lug 892 defines a second lug opening 896. The first and second lugs 890, 892 extend in a substantially perpendicular direction to the second surface 805 of the base plate 802. The first and second lug openings 894, 896 are aligned with each other.

The first and second lug openings 894, 896 extend substantially perpendicularly to the connection-bar opening 808. The first and second lugs 890, 892 are configured for attaching a connection-bar that is part of the beam (cf. connection-bar 370 in Figure 3B) to the beam attachment bracket 800. The connection-bar may be attached to the openings 894, 896 of the first and second lugs 890, 892 via a pivot pin. Accordingly, the connection-bar will be pivotable about an axis defined by the first and second lug openings 894, 896.

The first lug 890 is arranged on a first side of the connection-bar opening 808. The second lug 892 is arranged on a second side of the connection-bar opening 808 that is opposite to the first side. In other words, the first and second lugs 890, 892 are arranged on opposing sides of the connection-bar opening 808.

The first and second lugs 890, 892 are an example of a bar-frame connection point for connecting a connection-bar of a stone trip mechanism to the beam attachment bracket 800. Of course, the bar-frame connection point could also be constructed as any other attachment structure. For example, rather than having two individual lugs 890, 892, the bar-frame connection point may be defined by a single structure. However, it should be noted that any kind of bar-frame connection point should preferably extend from the second surface 805 of the base plate 802. This has significant advantages regarding the stability of the connection and between the beam and the beam attachment bracket 800, particularly during pivotal movement of the beam with respect to the main frame.

The beam attachment bracket 800 comprises a first pivot bushing 832 and a second pivot bushing 834. The first pivot bushing 832 defines a first pivot opening 836. The second pivot bushing defines a second pivot opening 838. The first and second pivot openings 836, 838 extend in a direction that is parallel to a longitudinal direction of the base plate 802. The first and second openings 836, 838 may be aligned with each other.

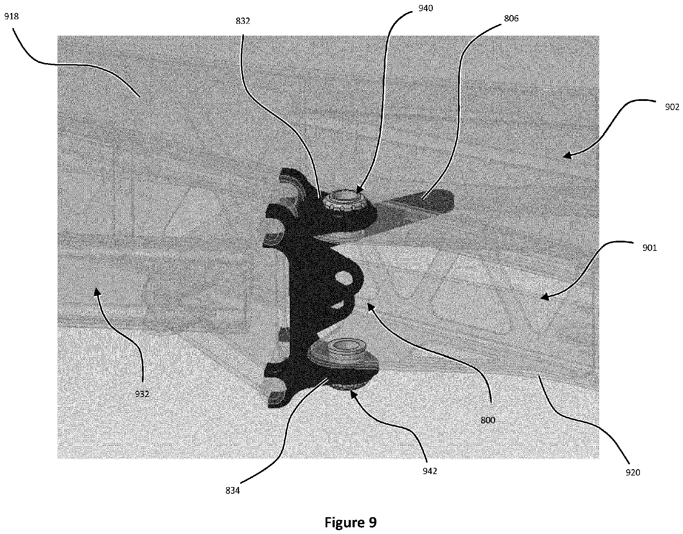

The first pivot bushing 832 is configured for connection to an outer surface of a first wall of the main frame as will be described in more detail with reference to Figure 9. The second pivot bushing 834 is configured for connection to an outer surface of a second wall of the main frame that is arranged opposite to the first wall. The first and second pivot bushings 832, 834, extend from the second surface 805 of the base plate 802.

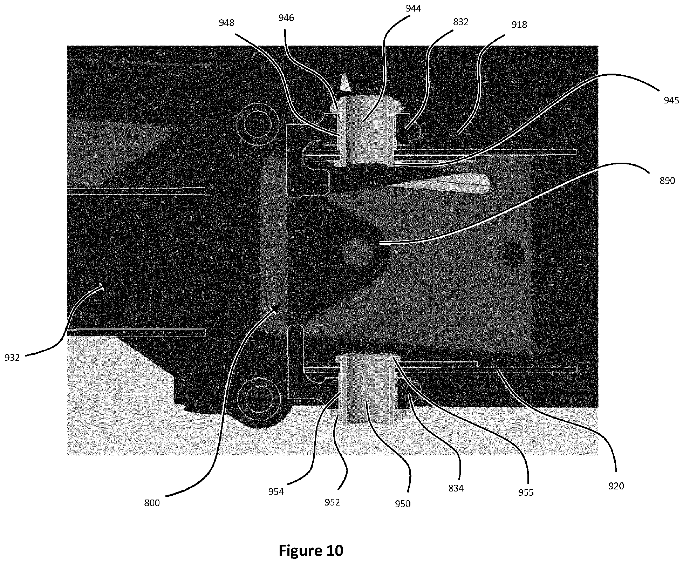

Figures 9 and 10 show the attachment bracket 800 of Figures 8A and 8B mounted to the outside of an exemplary main frame. Part of a beam 932 that is attached to the main frame via the beam attachment bracket 800 is also shown in Figures 9 and 10.

Figure 9 shows the beam attachment bracket 800 attached to the first and second walls 918, 920 of a main frame 902. In particular, the first pivot bushing 832 is connected to an outer surface of the first wall 918. The second pivot bushing 834 is connected to an outer surface of the opposite, second wall 920. In the embodiment of Figure 9, the pivot bushings 832, 834 of the beam attachment bracket 800 are attached to outer surfaces of lugs of the first and second walls 918, 920. Such lugs may be similar to the lugs 612a, 612b described with reference to Figure 6. In alternative embodiments, the main frame 902 may not include such lugs, in which case the first and second pivot bushings 832, 834 may be attached to any other part of the outer surface of the first and second walls 918, 920.

Similar to the embodiment shown in Figure 4, the first wall 918 may be an upper wall in the first configuration of the main frame 902 and a lower wall in the second configuration of the main frame 902. Similarly, the second wall 920 may be a lower wall in the first configuration of the main frame 902 and an upper wall in the second configuration of the main frame 902.

The first and second pivot bushing 832, 834 may be connected to the first and second walls 918, 920 of the main frame 902 via first and second fastening elements 940, 942, which will be described in more detail with reference to Figure 10. The first and second pivot bushings 940, 942 may be received within a pivot bearing that will allow the beam attachment bracket 800 to pivot with respect to the main frame 902.

The link member 806 of the beam attachment bracket 800 extends into the inner cavity 901 of the main frame 902, substantially in the same way as described with reference to Figure 6. In particular, the link member 806 may extend into the inner cavity 901 through an opening (e.g. a void) within a fourth wall of the main frame 902.

Referring to Figure 10, there is shown a cross-section through the beam 932 and the beam attachment bracket 800 shown in Figure 9. The cross-section of Figure 10 extends through the fastening members 940, 942.

The first pivot bushing 832 is connected to an outer surface of the first wall 918 of the main frame 902 via a first fastening member. The first fastening member comprises a pin 944, particularly a hollow pin, extending through the opening 836 defined by the first pivot bushing 832. The pin 944 also extends through a corresponding opening in the first wall 918 of the main frame (e.g. an opening extending through one of the lugs of the first wall 918). The pin 944 comprises a shoulder portion 945 at a first end of the pin 944. The shoulder portion 945 is configured to abut against an inside surface of the first wall 918, when the pin 944 is inserted into the opening of the first wall 918. A second end of the pin 944 may comprise a male, outside thread.

The first fastening member 940 further comprises a nut member 946. The nut member 946 may be removably attached to (e.g. screwed) to the outside thread of the pin 944. The nut member 946 abuts against an outside surface of the first pivot bushing 832 of the attachment bracket 800.

A first bearing 948 is arranged between the pin 944 and the opening 836 of the first pivot bushing 832. In other words, the first bearing 948 extends around the circumference of the pin 944 within the opening of the first pivot bushing 832. The bearing 948 may be any suitable bearing that allows the first pivot bushing 832 to rotate with respect to the pin 944.

The second pivot bushing 834 is connected to an outer surface of the second wall 920 via the second fastening member 942. In this embodiment, the second fastening member 942 is identical to the first fastening member 940. Accordingly, the second fastening member comprises a pin 950, particularly a hollow pin, extending through the opening of the second pivot bushing 834 and a corresponding opening within the second wall 920 (e.g. within a lug) of the main frame. The pin 950 has a shoulder portion 955 that abuts against an inside surface of the second wall 920 when in use. A second end of the pin 950 may comprise a male, outside thread.

The second fastening member 942 comprises a nut member 952. The nut member 952 may be connected to the male outside thread at the second end of the pin 950. To this end, the nut member 952 may comprise a female, inner thread.

In use, the nut member 952 abuts against an outer surface of the second pivot bushing 834 and secures the pin 950 within the opening of the second pivot bushing 834. A second bearing 954 is arranged between the pin 950 and the second pivot bushing 834. The bearing 954 enables the second pivot bushing 834 to pivot with respect to the pin 950 and thus with respect to the main frame.

The listing or discussion of an apparently prior-published document in this specification should not necessarily be taken as an acknowledgement that the document is part of the state of the art or is common general knowledge.

Preferences and options for a given aspect, feature or parameter of the disclosure should, unless the context indicates otherwise, be regarded as having been disclosed in combination with any and all preferences and options for all other aspects, features and parameters of the disclosure.

## Claims

1. An agricultural beam attachment bracket (800) for mounting a beam (932) for one or more ground engaging tools to a main frame (902) of an agricultural implement, the beam attachment bracket (800) being able to pivotably connect the beam (932) to the main frame, wherein the beam attachment bracket (800) is configured to be pivotably attached to an outer surface of the main frame (902), and wherein the beam attachment bracket (800) comprises a link member (806) configured to extend at least partly into an inner cavity (901) of the main frame (902).

2. The beam attachment bracket of Claim 1, comprising a first pivot bushing (832) configured for connection to an outer surface of a first wall (918) of the main frame (902) and a second pivot bushing (834) configured for connection to an outer surface of a second wall (920) of the main frame (902) that is arranged opposite to the first wall.

3. The beam attachment bracket (600) of Claim 1 or 2, wherein the beam attachment bracket (800) comprises:
a base plate (802);
a first hinge receptacle (816) extending from a first surface (804) of the base plate (802) and configured to form a first hinge joint together with a corresponding first hinge cylinder of the beam (932), the first hinge receptacle (816) facilitating a pivoting movement of the beam (932) about the first hinge receptacle when the main frame (902) is in a first configuration;
a second hinge receptacle (818) extending from the first surface (804) of the base plate (802) and configured to form a second hinge joint together with a corresponding second hinge cylinder of the beam (932), the second hinge receptacle (818) facilitating a pivoting movement of the beam (932) about the second hinge respectable, when the main frame (902) is in a second configuration; and
a bar-frame connection point for connecting a connection-bar of a stone-trip-mechanism to the beam attachment bracket (800), the bar-frame connection point extending from a second surface (805) of the base plate (802), the second surface (805) being opposite the first surface (804).

4. The beam attachment bracket (600) of Claim 3, wherein the link member (606) extends from the second surface (805) of the base plate (802).

5. The beam attachment bracket of Claim 3 or 4, wherein the base plate (802) comprises a connection-bar opening (808) extending between its first and second surface (804, 805).

6. The beam attachment bracket of Claim 5, wherein the bar-frame connection point comprises first and second lugs (890, 892) arranged adjacent to and on opposite sides of the connection-bar opening (808).

7. The beam attachment bracket (600) of any of Claims 3 to 6, wherein the base plate (802) and the link member (806) are integrally formed.

8. The beam attachment bracket (600) of any of Claims 1 to 7, wherein the beam attachment bracket (800) is made of steel or cast iron.

9. An agricultural implement comprising:
a main frame (902), said main frame being able to support a plurality of ground engaging tools and extending between a first end that is connectable to an agricultural work vehicle and an opposite, second end, wherein the main frame (902) defines at least one cavity (901) extending at least partly between the first and second end of the main frame (902);
at least one beam attachment bracket (800) according to any one of Claims 1 to 7.

10. The agricultural implement of Claim 9, comprising a stay arranged within the at least one cavity (901) of the main frame (902) and connected to the link member (806) of the at least one beam attachment bracket (800).

11. The agricultural implement of Claim 10, wherein the stay is connected to the link member (806) in such a way that movement of the stay causes a pivoting movement of the beam attachment bracket (800) with respect to the main frame (902).

12. The agricultural implement of Claim 10 or 11, wherein the agricultural implement comprises a plurality of said beam attachment brackets (800), each beam attachment bracket being pivotably connected to an outside surface of the main frame (902), and wherein each of the link members (806) is connected to the stay in such a way that movement of the stay causes synchronised pivoting movement of each of the beam attachment brackets (800).

13. The agricultural implement of any of Claims 9 to 12, wherein the main frame (902) comprises a first wall (918), an opposite second wall (920), an intermediate wall connecting the first and second walls, and wherein the intermediate wall comprises at least one void extending through the intermediate wall, and wherein the link member (806) of the at least one beam attachment bracket (800) extends through the at least one void into the at least one cavity (901) of the main frame (902).

14. The agricultural implement of Claim 13, wherein the at least one void is sized to allow movement of the link member (806) and the beam attachment bracket (800) with respect to the main frame (902).

15. The agricultural implement of any of Claims 9 to 14, wherein the main frame (902) comprises a first wall (918), an opposite second wall (920), the first and second walls each comprising an outer surface facing away from the at least one cavity (901) and an opposite, inner surface facing in the direction of the at least once cavity, and wherein the beam attachment bracket (800) comprises a first pivot bushing (832) pivotably connected to the outer surface of the first wall (918) and a second pivot bushing (834) pivotably connected to the outer surface of the second wall (920).
